Europäisches Patentamt

European Patent Office

Office européen des brevets

(11) Veröffentlichungsnummer: **0 508 383 A1**

# (12) EUROPÄISCHE PATENTANMELDUNG

(21) Anmeldenummer: **92106012.5**

(22) Anmeldetag: **07.04.92**

(51) Int. Cl.5: **C05F 7/00**, C05F 17/00

(30) Priorität: **08.04.91 DE 4111313**

(43) Veröffentlichungstag der Anmeldung:
**14.10.92 Patentblatt 92/42**

(84) Benannte Vertragsstaaten:
**AT BE CH DE DK ES FR GB IT LI NL SE**

(71) Anmelder: **ALLIED COLLOIDS GmbH**
**Tarpenring 23**
**W-2000 Hamburg 62(DE)**

(72) Erfinder: **Heydrich, Klaus**
**Im Wiesengrund 26**
**W-6384 Schmitten 6(DE)**

(74) Vertreter: **Vogeser, Werner, Dipl.-Ing. et al**
**Patentanwälte Hansmann, Vogeser, Alber,**
**Dr. Strych, Albert-Rosshaupter-Strasse 65**
**W-8000 München 70(DE)**

(54) **Mess- und Regelverfahren für die biologische Trocknung von Klärschlamm.**

(57) Es sind Verfahren zur biologischen, aeroben Trocknung von Klärschlämmen bekannt, bei denen der mechanisch vorentwässerte Klärschlamm, gegebenenfalls mit Zugabe von Flockungsmitteln, organischen Kohlenstoffträgern bzw. Rückgut, in zwangsbelüfteten Containern zur Rotte gelagert wird.

Um ein optimales Ergebnis dieses Prozeßes zu erlangen, ist eine Prozeßsteuerung und -regelung nötig, bei der unter Messung möglichst weniger und einfach festzustellender Parameter eine Prozeßoptimierung vollzogen werden soll, auch im Hinblick auf möglichst geringe Prozeßkosten.

Verändert werden dabei das Mischungsverhältnis sowie der Durchsatz von Schlamm und Rückgut, sowie der Durchsatz und die Temperatur der in jeden Container eingeblasenen Luft, sowie die Verweildauer des Substrates im Container.

EP 0 508 383 A1

Die Erfindung betrifft ein Meß- und Regelverfahren zum Beseitigen von Klärschlamm. Dieser wird durch biologische Trocknung in ein humusähnliches Substrat umgewandelt.

Der Schlamm wird zu diesem Zweck zunächst mechanisch entwässert, bis er etwa 15 bis 45% Trockensubstanz (TS) enthält, und anschließend in geschlossenen, vorzugsweise isolierten, zwangsbelüftbaren Containern zum aeroben Verrotten für ca. 5 bis 10 Tage gelagert. Je nach dem Gehalt an Feststoff (Trockensubstanz) und organischer Trockensubstanz (OTS) sowie der vorhandenen Struktur werden dem Schlamm KohlenstoffTräger wie etwa Sägemehl zugegeben, sowie gegebenenfalls Additive und Rückgut aus dem Prozeß zum Impfen und Strukturieren des Schlammes. An die Vorrotte im Container schließt sich in der Regel eine mehrere Wochen dauernde Nachrotte (offen, überdacht) an. Vor allem bei der Vorrotte wird ein erheblicher Anteil des im dem Schlamm enthaltenen Kohlenstoffes in Kohlendioxyd umgewandelt und gleichzeitig ein erheblicher Anteil des nach dem mechanischen Entwässern noch vorhandenen Wassers verdunstet.

Ein derartiges Verfahren ist beispielsweise in der älteren deutschen Patentanmeldung P 4019389 beschrieben.

Eine Schwierigkeit dieses Verfahrens besteht darin, den Prozeß optimal zu regeln.

Dabei zerfällt das gesamte Verfahren regelungstechnisch in zwei Regelkreise, die jedoch durch Wechselwirkungen miteinander verbunden sind:

Der erste Regelkreis betrifft das quantitative Zusammenführen des Schlammes mit dem Rückgut und/oder dem Kohlenstoff-Träger und eventueller Additive. Zu diesem Zweck müssen von beiden Komponenten sowohl der Gehalt an Trockensubstanz (%TS), der Gehalt an organischer Trockensubstanz (hiervon % OTS) sowie der Massendurchsatz pro Zeiteinheit bekannt sein.

Der zweite Regelkreis betrifft die Vorgänge im geschlossenen, zwangsbelüffteten Conainer:

Dort können sowohl die Temperatur der eingeblasenen Luft als auch die eingeblasene Luftmenge pro Zeiteinheit variiert werden als auch die Verweildauer des Substrates im Container. Speziell dieser zweite Regelkreis ist jedoch davon abhängig, mit welchem Ziel das Ergebnis des Prozeßes optimiert werden soll. Dies hängt zunächst einmal davon ab, zu welchem Zweck das erhaltene Rotteprodukt verwendet werden soll: Es stehen sowohl das Ablagern auf Deponien, das Ausbringen in der Landwirtschaft als Dünger, das Verbrennen und die Verwendung als Rückgut im durchlaufenen Prozeß zur Verfügung.

Da ein gewisses Maß an Rückgutzugabe zum Impfen unerläßlich ist, um die den Prozeß betreibenden Mikroben in das Eingangsgemisch einzubringen, beinflußen die Werte von TS und OTS des aus dem Container entnommenen Materials zwangsläufig auch den ersten Regelkreis.

Die Aufgabe besteht darin, mit dem bekannten Verfahren - und meist auch mit einer vorhandenen Maschinenausstattung - eine größtmögliche Schlammmenge zu verarbeiten, wobei die Betriebskosten so gering wie möglich sein sollen.

Wenn die Verarbeitungsmenge an Schlamm möglichst groß sein soll, bedeutet dies, daß möglichst wenig Masse im Kreisprozeß, also als Rückgut, geführt werden darf. Auf der anderen Seite sollen die Betriebskosten minimiert werden, die sich nicht nur in den Kosten für die Anlage, den Energiekosten zum Betrieb der mechanischen Entwässerung, der Belüftung und des Aufheizens der Containerluft niederschlagen, sondern auch im Platzbedarf für die Container der Vorrotte, sodaß auch darauf zu achten ist, daß die Verweildauer in den Containern möglichst gering ist.

Diese Aufgabe ist durch die gekennzeichneten Merkmale der Ansprüche 1 und 4 gelöst. Vorteilhafte Ausführungsformen ergeben sich aus den Unteransprüchen.

Das Ziel der Regelung des ersten Regelkreises besteht darin, mit möglichst wenig Rückgut und anderen Zugaben ein Substrat zu schaffen, welches in die Container zur Vorrotte eingegeben werden kann und folgende Bedingungen möglichst gut erfüllen soll:

Voraussetzung für die Vorrotte ist, daß das Eingangssubstrat eine krümelige, tuffige, nicht zu harte Struktur besitzt, damit nach Ablagern in den Containern viele fein verteilte Freiräume zum hindurchdringen der Luft vorhanden sind. Dieses Gemisch sollte einen Trockensubstanzgehalt von vorzugsweise 40 bis 48% besitzen, was die ideale Voraussetzung für den nachfolgenden Rotte-Prozeß darstellt. Gleichzeitig soll jedoch der OTS-Gehalt möglichst hoch liegen, vorzugsweise bei mindestens 55 % der Trockensubstanz, da ein möglichst hoher Gehalt an organischer Trockensubstanz und damit Kohlenstoff die Ausgangsbasis für ein gutes "Funktionieren" der Mikroben ist.

Die Prozentangaben beziehen sich auf das Gewicht. Die OTS-%-Angaben beziehen sich auf den gesamten TS-Gehalt als 100%-Basis.

Ein solches Gemisch soll durch Verwendung von möglichst viel Schlamm und möglichst geringe Rückgutzugabe geschaffen werden, wobei erfahrungsgemäß ein Mischungsverhältnis von 1:1 (entwässerter Schlamm/Rückgut bzw. C-Träger) bereits als gutes Verhältnis anzusehen ist. Falls unter diesen Bedingungen der Durchsatz des Gesamtprozeßes gesteigert werden kann - wobei auch die begrenzenden Faktoren des zweiten Regelkreises, wie Verfügbarkeit einer ausreichend großen Anzahl von Containern und Stellflächen etc. gewährleistet sein muß - so sollte dies nicht durch Reduzierung der Rückgutzugabe, sondern durch Steigerung des Schlammdurchsatzes geschehen, bis die schlammseitige Maschinenkapazität ausgeschöpft ist, also beispielsweise die Kapazität der Vorrichtung zum mechanischen Entwässern.

Besonders beim parallelen Betrieb mehrerer Maschinen zum Mechanischen Entwässern, also von Siebbandpressen oder Kammerfilterpressen, ist dabei zu bedenken, daß Volumenstrom und erzielbarer Zuwachs an Trockensubstanzgehalt sich in der Regel umgekehrt proportional zueinander verhalten. Deshalb kann nicht prinzipiell der größtmögliche Mengendurchsatz solcher Entwässerungsaggregate eingestellt werden, da dann meist zu geringe Trockensubstanzgehalte erzielt werden (ausgehend von einem Trockensubstanz-Gehalt des Rohschlammes in der Größenordnung von etwa 2 bis 5 %), sodaß eine sehr große Menge an relativ trockenem Rückgut zugegeben werden muß, um beim Beschicken der Container beim Trockensubstanzgehalt in der gewünschten Größenordnung von 40 bis 48 % zu liegen.

Auch eine Zugabe von Rückgut/C-Träger vor der mechanischen Entwässerung ist oft sinnvoll, da dies den Entwässerungserfolg in der Maschine verbessern, und dabei sogar noch die Durchsatzleistung an Rohschlamm durch die Maschine erhöhen kann. Dies ist z.B. auf das Aufbrechen der Schlammflocken zurückzuführen. Dadurch kann insgesamt die Rückgutzugabe verringert und auch der Einsatz der im Betrieb sehr teuren Pallmannmühle reduziert werden.

Um den ersten Regelkreis optimieren zu können, müssen eine Reihe von Parametern bekannt sein:
Zunächst müssen TS-Gehalt und OTS-Gehalt des Rückgutes bekannt sein. Da das Rückgut in einem Vorratsbehälter zur Verfügung steht, kann es dem ausreichend gemischten Inhalt dieses Vorratsbehälters probeweise entnommen und im Labor bestimmt werden. Der Trockensubstanzgehalt wird ermittelt, indem die Probe über 24 Stunden bei 105° C gehalten wird, und der OTS-Gehalt, in dem die Probe unter Sauerstoffüberschuß 30 Minuten bei 550° bis 600° C geglüht wird, wobei der gewichtsmäßige Glühverlust den enthaltenen Anteil an organischen Substanzen, also an Kohlenstoff, darstellt.

Dieses Rückgut, welches vor dem Zugeben zusätzlich in einer sog. Pallmannmühle gemahlen wird, wird meist über ein Transportband zugegeben, wobei der Mengendurchsatz des Transportbandes kontinuierlich gemessen wird, beispielsweise indem in das Transportband eine sog. Bandwaage eingebaut ist. Vorzugsweise sollte dabei vor der Bandwaage eine mechanische Schikane eingebaut werden, die die Beladung des Transportbandes hinsichtlich Höhe und Breite durch einfache Abstreifer egalisiert, so daß sich die von der Bandwaage gemessenen Werte nur geringfügig und relativ langsam verändern. Durch diese Schikane darf kein Zusammenpressen des Rückgutes auf dem Transportband erfolgen.

Wenn diese drei Parameter bekannt sind, kann durch Regeln der Geschwindigkeit des Transportbandes die Mengenzugabe an Rückgut als auch die damit zugegebene Menge an Trockensubstanz und organischer Trockensubstanz vorherbestimmt werden. Gleiches gilt auch bei einer alternativen oder zusätzlichen Zugabe eines organischen Kohlenstoffträgers wie etwa Sägemehl oder Rinde.

Ebenso müssen TS- und OTS-Gehalt sowie der Mengendurchsatz des verwendeten Schlammes bekannt sein: Da auch der verwendete Schlamm aus Vorratsbehältern oder zumindest relativ großen Zwischenpuffern entnommen wird, deren Zusammensetzung sich nur relativ langsam ändert, können aus diesem Vorratsbehälter bzw. Zwischenpuffer wiederum Proben entnommen, und auf ihrem Gehalt an TS und OTS überprüft werden. Natürlich können die TS- und OTS-Gehalte auch online kontinuierlich gemessen werden, nur muß hierfür ein ungleich höherer Aufwand getrieben werden als bei Labormäßiger Ermittlung. Ferner muß bekannt sein, ob als Schlamm Faul-Schlamm oder ungefaulter Rohschlamm verwendet wird. Diese Tatsache ist dann nicht nur ein zu überwachender Parameter, sondern auch eine Regelungsgröße, wenn die Möglichkeit besteht, anstelle des normalerweise verwendeten gefaulten Schlammes im Prozeß direkt mit Rohschlamm zu beschicken, der einen wesentlich höheren OTS-Gehalt aufweist.

Der Gehalt an TS kann aufgrund des langwierigen Bestimmungsvorganges deshalb mit vertretbarem Aufwand immer nur direkt aus dem Vorratsbehälter bzw. Zwischenpuffer für den Schlamm bestimmt werden, nicht jedoch während des Durchlaufes nach der mechanischen Entwässerung, also beispielsweise der Kammerfilterpresse, bestimmt werden. Dieser TS-Gehalt und Durchsatz nach der mechanischen Entwässerung ist jedoch für das Zumischen des Rückgutes die relevante Größe, die dadurch erhalten werden kann, daß auf der einen Seite der Mengendurchsatz am Einlauf der mechanischen Entwässerung mit Hilfe von induktiven Meßwertgebern (IDM) in $m^3/h$ und die Dichte des Rohschlammes nach radiometrischen Verfahren in $kg/m^3$ bestimmt wird, woraus sich der Durchsatz an Trockensubstanz pro Stunde errechnen läßt, und andererseits die Menge des pro Zeiteinheit bei der mechanischen Entwässerung abgeschiedenen Wassers durch Durchflußmesser kontinuierlich bestimmt wird, wodurch sich der TS-Gehalt nach dem Entwässern errechnen läßt.

Selbst bei einem sich relativ schnell ändernden Entwässerungsvermögen der eingesetzten Maschine - was aufgrund von Verschmutzung der Filterelemente etc. leicht möglich ist - kann damit kontinuierlich der TS-Gehalt des Schlammes unmittelbar nach der mechanischen Entwässerung bestimmt werden.

Zur Kontrolle sollte dieser errechnete Wert etwa einmal pro Tag durch eine nach der mechanischen Entwässerung entnommene Schlammprobe durch labormäßige Bestimmung von TS und OTS auf Übereinstimmung mit den kontinuierlich berechneten Werten überprüft werden, wobei Schwankungen von +/- einem Prozent durchaus akzeptabel sind.

Bei parallelem Betrieb mehrerer mechanischer Entwässerungsmaschinen ist die vorgenannte Meßwertermittlung und Berechung der Werte für den Schlamm nach der mechanischen Entwässerung für jede Entwässerungsmaschine separat durchzuführen und unter Berücksichtigung der Massendurchsätze der einzelnen Maschinen der Durchschnittswert für den gesamten, mechanisch entwässerten Schlamm zu bestimmen.

Mit diesen bekannten Parametern kann der Prozeß im Hinblick auf die Zielgrößen optimiert werden:

Der einfachste Fall ist dann gegeben, wenn bei einer Reduzierung des Rückgutes bis zu dem Punkt, an dem das erhaltene Gemisch gerade noch tuffig und krümelig ist, immer noch OTS-Gehalte von wenigstens 55 % für das Gesamtgemisch erhalten werden und der TS-Gehalt im angestrebten Bereich vom 40 bis 48 %, und dabei lieber an der unteren Grenze, liegt.

Falls jedoch der OTS-Gehalt dabei unter etwa 50 % absinkt, muß dem Gemisch mehr Kohlenstoff zugeführt werden. Dies sollte vorzugsweise durch erhöhte Zugabe von Rückgut erzielt werden. Durch Gegenüberstellung der TS- und OTS-Gehalte des entwässerten Schlammes als auch des Rückgutes kann festgestellt werden, ob sich dann der TS-Gehalt noch innerhalb der gewünschten Bandbreite befinden würde. Ist dies nicht der Fall, so muß zusätzlich zum Rückgut ein organischer Kohlenstoffträger wie etwa Sägemehl etc. zugegeben werden, bei dem nicht nur der TS-, sondern vor allem auch der OTS-Gehalt höher liegt als bei dem verwendeten Rückgut.

Falls der gesamte Prozeß mit Faulschlamm betrieben wird, so sollte vorab überprüft werden, ob durch Verwendung von ungefaultem Rohschlamm (dessen OTS-Gehalt hierfür bekannt sein müßte) auf den Einsatz eines zusätzlichen Kohlenstoff-Trägers anstelle von Rückgut verzichtet werden kann.

Der zweite Regelkreis betrifft die in den Containern ablaufenden Vorgänge.

Es können dabei sowohl die Menge als auch die Temperatur der durchgepumpten Luft verändert werden, sowie die Verweildauer des Substrates im Container.

Bei neutralisieren der Geruchsstoffe in der Abluft durch Hindurchleiten durch einen Kontaktwäscher, bei dem die Abluft mit ebenfalls in ein Becken etc. eingepumptem Belebtschlamm in Kontakt kommt, kann zusätzlich der Durchsatz dieses Belebtschlammes gesteuert werden: Dieser liegt zwischen 0,4 und 2,0% TS-Gehalt, und pro $m^3$ hindurchgepumter Abluft muß Belebtschlamm mit 1 kg TS-Anteil durch den Wäscher gepumpt werden. Dabei funktioniert diese Kontaktwäsche umso besser, wenn der Belebtschlamm so lange im Wäscher verbleibt bzw. im Kreislauf wenigstens z.T. immer wieder durch den Wäscher geführt wird, daß die darin befindlichen Bakterien Zeit zum adaptieren an das Milieu der Abluft haben. Statt dessen können auch bereits adaptierte Mikroben in den Wäscher zugegeben werden, die insbesondere zum umbauen von Verbindungen mit Schwefelanteil geeignet sein müssen.

Dabei ist zunächst zu entscheiden, ob das Rottegut nach dem Verlassen des Containers deponiert oder als landwirtschaftlicher Dünger ausgebracht oder verbrannt werden soll. Ein Teil des Endproduktes muß immer als Rückgut zur Verfügung gestellt werden, wobei nicht ein bestimmter Anteil jedes Containers als Rückgut verwendet wird, sondern entsprechend der benötigten Rückgut-Mengen immer wieder einzelne Chargen, also ganze Container, im Hinblick auf die Verwendung als Rückgut optimiert werden.

Die Optimierung im Hinblick auf den Verwendungszweck ist entscheidend, da der Prozeß in den Containern je nach Verwendungszweck auf unterschiedliche Zielgrößen hin gesteuert werden muß:
- als landwirtschaftlicher Dünger: unter 40% OTS, 60 - 85% TS, ausbringungfreundliche Struktur
- für das Deponieren: möglichst wenig OTS, möglichst wenig Wasseranteil,
- für die Verbrennung: möglichst viel OTS, möglichst wenig Wasseranteil, und
- als Rückgut: möglichst viel OTS, möglichst wenig Wasseranteil.

Dabei widerspricht ein hoher, angestrebter OTS-Gehalt nicht der Forderung nach hoher biologischer Aktivität, da hierbei niedermolekulare organische Verbindungen in hochmolekulare umgewandelt werden, was den Heizwert des Substrates erhöht aber kaum einen C-Austrag aus dem Container stattfinden läßt.

Diese jeweiligen Ziele werden durch Beeinflussung des im Container ablaufenden mikrobiologischen Prozeßes angestrebt, wofür dessen Zustand laufend ermittelt werden muß. Zu diesem Zweck werden außer den beeinflußbaren Größen, also Luftdurchsatz und Lufttemperatur, auch die Differenz des Sauerstoffgehaltes der Zu- und Abluft, als auch die Differenz der Feuchte-Gehalte der Zu- und Abluft ermittelt, wobei eine kontinuierliche Messwerterfassung bzw. eine Messwerterfassung in relativ geringen zeitlichen Abständen von maximal zwei Stunden angestrebt werden sollte.

Weiterhin wird der Kohlendioxyd-Gehalt der Abluft ermittelt, woraus sich durch Gegenüberstellung mit den normalen Kohlendioxyd-Gehalt der Umgebungsluft unter Berücksichtigung des Luftdurchsatzes und der Lufttemperatur der Abluft, die ebenfalls ermittelt wird, der Kohlenstoffaustrag berechnen läßt. Integriert über die Zeit errechnet sich damit die kontinuierliche Abnahme des OTS-Gehaltes des Containerinhalts.

Auf gleiche Art und Weise läßt sich aus der Differenz der Feuchte-Gehalte der Zu- und Abluft sowie deren Temperaturen und Mengendurchsatz der Wasseraustrag feststellen, woraus sich integriert über die Zeit- und selbstverständlich unter Berücksichtigung der Masse des Containersinhaltes - die Steigerung des TS-Gehaltes im Container berechnet.

Weiterhin wird die Temperatur des Containerinhaltes selbst zu Kontrollzwecken etwa einmal pro Tag ermittelt, und zwar an unterschiedlichen Stellen gleichzeitig innerhalb des Containers, vorzugsweise im oberen, mittleren und unteren Bereich. Dadurch wird überprüft, ob der Rotteprozeß gleichmäßig im gesamten Container stattfindet, und partiell auftretende Faulnester aufgrund mangelnder Belüftung werden rechtzeitig erkannt, bevor der gesamte Containerinhalt unbrauchbar wird.

Die zunächst nur rechnerisch über die gesamte zeitliche Dauer des Rotteprozeßes ermittelten Werte des TS- sowie des OTS-Gehaltes werden auch bei Beendigung der Rotte im Container festgestellt, und können dann direkt als Eingangsgrößen des Rückgutes im ersten Regelkreis dienen, wobei natürlich sichergestellt werden muß, daß das zwischengelagerte Rückgut vor dem Einbringen in den Kreislauf nicht durch Beregnen etc.in den TS- und OTS-Gehalten wesentlich verändert wird.

Das Ziel der Regelung besteht darin, mit möglichst geringem Energieaufwand für die Zwangsbelüftung und das Aufheizen der Zuluft und ggfs. der Energie für die Belebtschlammpumpe für den Kontakt-Abluft-Wäscher, die biologische Aktivität zu optimieren, also unter anderem den Mengenaustrag bei begrenzter Anzahl von zur Verfügung stehenden Containern.Zudiesem Zweck kann die Abluft auch über einen Wärmetauscher geleitet werden, dessen Energiegewinn wieder für das Aufheizen der Container zur Verfügung steht.

Ob als konkretes Optimierungsziel in erster Linie die Energiekosten oder der Massenaustrag vorgegeben wird, hängt von den jeweiligen Verhältnissen, also der im Einzelfall begrenzenden Größe ab.

Aus dieser begrenzenden Größe ergibt sich zusammen mit dem geplanten Verwendungszweck des Rottegutes, ob und mit welcher Priorität hohe bzw. niedrige TS- und OTS-Gehalte anzustreben sind.

Dabei sind grundsätzliche Gegebenheiten einzuhalten:

Bei einer Verweildauer des Rottegutes im Container von in der Regel 6 bis 10 Tagen beginnt der mikrobiologische Prozeß während des ersten Tages erst langsam anzulaufen durch gleichmäßige Verteilung der Mikroben innerhalb des Substrates und deren zunehmende Aktivität. In dieser Phase ist ein allzu starker Luftdurchsatz unwirtschaftlich, da die durch das Substrat streifende Luft lediglich vorhandenes ungebundenes Wasser verdammpft und austrägt, bei starker Strömung jedoch auch die innerhalb des Substrates zu belassenden Mikroben.

Vom zweiten bis etwa fünften Tag ist der Rotteprozeß dagegen voll aktiv, so daß in dieser Zeit mit entsprechender langsamer Erhöhung und später wieder Absenkung der Luftdurchsatz den Maximalwert der Bandbreite erreichen sollte, die zwischen 5 und 12 $m^3$ Luft je Stunde und $m^3$ Substrat liegt. Dadurch wird der Austrag des von den Mikroben erzeugten Kohlendioxyds sowie des ebenfalls erzeugten Wasserdampfes gewährleistet.

Die Temperatur der Zuluft, die während des ersten Tages bei etwa 70 Grad lag, kann in dieser Phase bis auf etwa 45 Grad zurückgenommen werden, sofern die Messungen der Temperatur des Container-Inhaltes hierbei weiterhin im Bereich von 50 bis 85 Grad Celsius gehalten werden können.

Als konkrete Grenzen angegeben, sollte der Luftdurchsatz zwischen 50 und 120 $m^3$ Luft je Stunde und Container betragen, solange die Wasseraufnahme dieser Luft bei mehr als 2 Gramm Wasser pro durchströmendem Kubikmeter Luft liegt, falls das Ziel ein hoher TS-Gehalt ist.

Ist das Ziel dagegen ein niedriger OTS-Gehalt, so sollte als Bedingung für einen entsprechenden Luftdurchsatz der $CO_2$- Gehalt der Abluft mindestens fünfmal, vorzugsweise zehnmal, dem normalen $CO_2$ Gehalt der Luft entsprechen, der bei 0.003 % liegt. Alternativ hierzu kann die Differenz des Sauerstoffgehaltes der Zuluft zur Abluft festgestellt werden, der ebenfalls mindestens den Faktor 5 betragen sollte. Beim Überschreiten dieser Werte ist der Luftdurchsatz proportional abzusenken.

Dies wird in der Regel in der Endphase dieser Vorrotte der Fall sein, also ab etwa dem sechsten Tag des Verweilens im Container. In dieser Zeit läuft der mikrobiologische Prozeß nur noch in verringertem Umfang ab, wobei das Abbrechen der Vorrotte von dem gewünschten Gehalt an TS und OTS abhängt. Dabei sind Überschreitungen von 70 % Trockensubstanz wenig sinnvoll, da dann der Wassergehalt für einen sinnvollen Ablauf des mikrobiologischen Prozeßes zu gering wird.

Die Temperatur der Zuluft wird dabei zwischen 45 Grad und 70 Grad Celsius gehalten, solange die Luftaustrittstemperatur nicht höher liegt als 20 Grad über der Lufteintrittstemperatur und nicht niedriger als 10 Grad unter der Lufteintrittstemperatur. Falls sich der Rotteprozeß noch in seiner Hauptphase befindet, also im zweiten bis fünften Tag der Verweildauer im Container, muß gleichzeitig im Substrat eine Durchschnittstemperatur von etwa 50 bis 85 Grad Celsius herrschen, und zusätzlich darf der OTS-Gehalt noch nicht unter 35 % der Trockensubstanz gesunken sein, da er das Nahrungsangebot für die Mikroben darstellt.

Im Gegensatz dazu muß bei angestrebtem hohen OTS-Gehalt der Prozeß bereits dann beendet werden, wenn der $CO_2$-Gehalt der Abluft deutlich zu steigen beginnt, bzw. das Verhältnis der Sauerstoffgehalte von Zu- und Abluft kleiner als 5 wird, da dann eine Veratmung der organischen Bestandteile durch die Mikroben stattfindet.

Eine Ausführungsform gemäß der Erfindung ist im Folgenden anhand der Prinzipskizze des Verfahrens näher erläutert:

Sowohl Rohschlamm als auch Faulschlamm steht in großen Behältern zur Verfügung, wobei hauptsächlich Faulschlamm verarbeitet werden soll. Der Gehalt an TS und OTS des Schlammes wird chargenweise ermittelt (4./5. Messgröße), da sich deren Gehalt über die Zeit nur geringfügig bzw. pro Charge überhaupt nicht ändert.

Dieser Schlamm wird - gegebenenfalls nach Zusetzen von Additiven, Rückgut, oder einem Kohlenstoff-Träger - z.B. in einer Siebbandpresse mechanisch entwässert. Möglichst unmittelbar vor dem Eingang in die Siebbandpresse wird mittels induktiver Messwertgeber eine kontinuierliche Durchflußmessung durchgeführt, also der Mengendurchsatz (6. Messgröße) dieses Ausgangsproduktes festgehalten, da die Durchsatzermittlung nach der mechanischen Entwässerung bei einem entsprechend pasteusen Zustand bei einer gewünschten kontinuierlichen Ermittlung weitaus aufwendiger wäre.

Da gleichzeitig entweder die Dichte des Schlammes am Eingang in die mech. Entwässerung (7. MG) kontinuierlich nach dem radiometrischen Meßprinzip ermittelt wird oder der Durchsatz des durch die Siebbandpresse ausgetragenen Wassers (8.MG) permanent ermittelt wird, ist damit der Gehalt und auch der Durchsatz an TS und OTS am Ausgang der Siebbandpresse unter Berücksichtigung des Zeitversatzes von in der Regel einigen Minuten bekannt.

Diesem Produkt wird nun Rückgut und/oder ein Kohlenstoff-Träger zugesetzt, dessen TS- und OTS-Gehalt (1./2. Messgröße) chargenweise im Vorratsbehälter ermittelt wurde. Dieses Gemisch durchläuft danach eine Pallmannmühle zur Strukturierung, falls notwendig, da der Betrieb dieser Pallmannmühle viel Energie benötigt. Die Beimengung wird hinsichtlich Ihres Durchsatzes (3.Messgröße) kontinuierlich mit Hilfe einer Bandwaage gemessen, wobei die Beladung des Bandes mechanisch egalisiert ist, um starke Schwankungen der Beladung zu vermeiden.

Durch Regelung des Schlammdurchsatzes bzw. der Betriebsgeschwindigkeit der Entwässerungsmaschine einerseits und/oder des Beimengungsdurchsatzes, also der 3. und 7. MG, wird das Mischungsverhältnis, und damit sowohl der Mengendurchsatz als auch der TS-, und der OTS-Gehalt des Gesamtgemisches festgelegt. Nach Durchlaufen eines Mischers, meist eines Doppelwellenmischers wird dieses Gemisch als Substrat zur Rotte für 5 bis 10 Tage in einzelne Container verbracht.

Am bzw. im Container werden folgende Werte regelmäßig ermittelt:

9. MG: Durchsatz Lufteintritt,
10. MG: Sauerstoffgehalt Lufteintritt,
11. MG: Sauerstoffgehalt Luftaustritt,
12. MG: Feuchtegehalt Lufteintritt,
13. MG: Feuchtegehalt Luftaustritt,
14. MG: $CO_2$-Gehalt Luftaustritt,
15. MG: Temperatur Lufteintritt,
16. MG: Temperatur Luftaustritt,
17. MG: Temperatur des Substrates.

Die Temperatur des Substrates wird dabei an mehreren verschiedenen Stellen des Containers in Abständen von etwa einer Stunde gemessen und gemittelt.

Die 9. und 15. Meßgrösse, also der Luftdurchsatz und die Lufteintrittstemperatur, sowie die Verweildauer des Substrates im Container, werden dabei im Hinblick auf das Ziel, also den Verwendungszweck und damit die angestrebten TS- und OTS-Gehalte, nach den oben beschriebenen Grundsätzen geregelt.

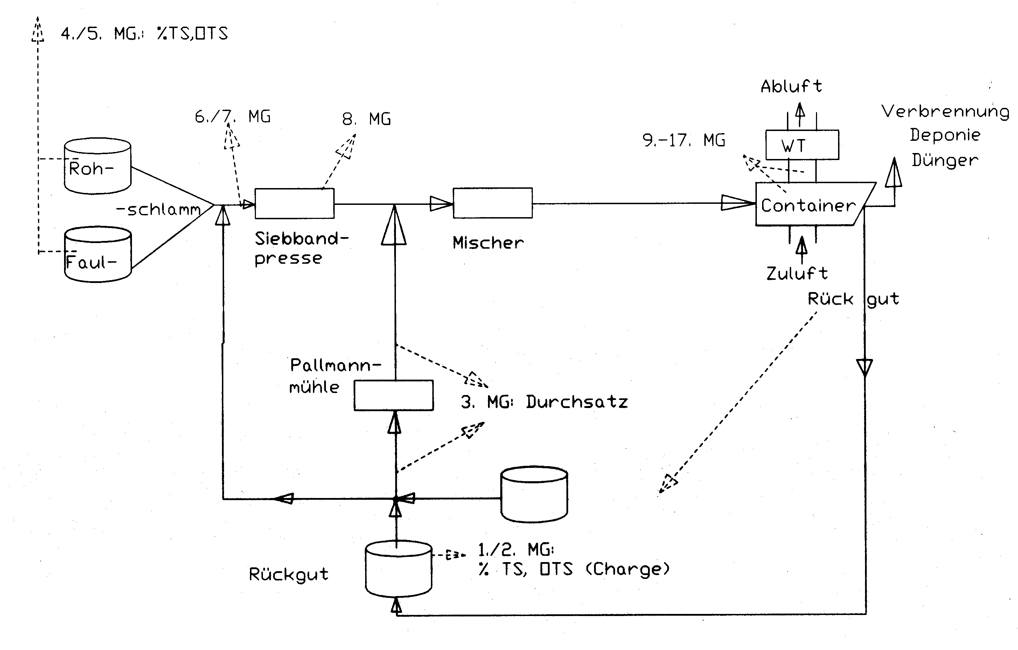

Wie die Figur weiterhin zeigt, wird die Abluft nach dem Verlassen der Container und vor einer eventuellen Zuführung zu einem Wäscher über einen Wärmetauscher geleitet. Dessen Wärmegewinn kann z.B. zum direkten Aufheizen der Zuluft verwendet werden.

**Patentansprüche**

1. Meß- und Regelverfahren für die biologische Trocknung von Klärschlamm, bei dem
   - Rohschlamm oder Faulschlamm mechanisch entwässert,
   - strukturiertes Rückgut und/oder ein Kohlenstoff-Träger, z.B. Sägemehl, zugegeben und vermischt wird, dieses Substrat in zwangsbelüfteten Containern ca. sieben bis zehn Tage zum Verrotten unter Kohlenstoff-Veratmung gelagert und

- einige Wochen anschließend im Freien zur Nachrotte gelagert wird,

**dadurch gekennzeichnet, daß**

vor der Zugabe des Rückgutes bzw. des Kohlenstoffträgers,

a) der Massendurchsatz an Schlamm pro Zeiteinheit,

b) der Gehalt an Trockensubstanz (% TS) des entwässerten Schlammes und

c) der Gehalt an organischer Trockensubstanz (% OTS) des entwässerten Schlammes,

d) der Gehalt an Trockensubstanz (% TS) des Rückgutes/Kohlenstoff-Trägers,

e) der Gehalt an organischer Trockensubstanz (% OTS) des Rückgutes/Kohlenstoff-Trägers und

f) der Massendurchsatz des Rückgutes/Kohlenstoff-Trägers pro Zeiteinheit ermittelt und der Massendurchsatz des entwässerten Schlammes und/oder des Rückgutes/Kohlenstoff-Trägers so geregelt wird, daß

g) das durchgemischte Substrat eine tuffige, krümelige Struktur besitzt,

h) dieses Substrat vor der Eingabe in die Container einen TS-Gehalt von 35 bis 60%, vorzugsweise von 40 bis 48 % besitzt,

i) das Substrat vor Eingabe in die Container einen maximalen OTS-Gehalt, vorzugsweise von mehr als 55 %, besitzt, und

j) das Mischungsverhältnis der Masse des Schlammes zur Masse des Rückgutes/Kohlenstoff-Trägers möglichst hoch, vorzugsweise über 1 : 1, liegt, so daß der schlammseitige Teil der benutzten Anlage mit größtmöglicher Kapazität betrieben werden kann.

2. Meß- und Regelverfahren nach Anspruch 1,
**dadurch gekennzeichnet, daß**

- die Zugabe von Rückgut soweit reduziert wird, daß der TS-Gehalt so niedrig wird, daß gerade noch eine tuffige Struktur des Substrates gegeben ist,

- im Falle eines dann vorliegenden OTS-Gehaltes von kleiner als 50 % (bezogen auf TS),

a) die Rückgutzugabe erhöht wird, falls sich die OTS-Gehalte von Schlamm und Rückgut so zueinander verhalten, daß ein OTS-Gehalt des Substrates von wenigstens 50 % erreicht wird, ohne daß der TS-Gehalt des Substrates über 50 % steigt oder hilfsweise

b) als Schlamm Rohschlamm verwendet wird, falls bisher Faulschlamm eingesetzt war, oder hilfsweise

c) falls bisher schon Rohschlamm eingesetzt war, eine möglichst geringe Zugabe eines Kohlenstoff-Trägers erfolgt, unter Beachtung der Zielbereiche.

3. Meß- und Regelverfahren nach Anspruch 1 oder 2,
**dadurch gekennzeichnet, daß**

- der Gehalt an TS und OTS des Rückgutes/Kohlenstoffträgers sowie des Schlammes chargenweise labormäßig ermittelt wird,

- der Massendurchsatz des Rückgutes/Kohlenstoff-Trägers in zeitlichen Abständen, beispielsweise durch Bandwaagen, ermittelt wird, wobei die Bandbeladung durch einen mechanischen Querschnittsbegrenzer für die Beladung vor der Meßstelle egalisiert wird, ohne dabei die Beladung auf dem Band zusammenzupressen,

- der Massendurchsatz des entwässerten Schlammes ermittelt wird, indem vor der mechanischen Entwässerung der Durchsatz des flüssigen Schlammes kontinuierlich durch induktive Durchflußmessung (IDM) und die Dichte des Schlammes (in % TS) kontinuierlich nach dem radiometrischen Messprinzip gemessen und

- unter Berücksichtigung der kontinuierlichen gemessenen Menge des abgetrennten Schlammwassers sowie des Zeitversatzes für das Durchlaufen des Entwässerungsaggregates der Durchsatz an TS des Schlammes pro Zeiteinheit nach der mech. Entwässerung berechnet und

- durch die Verstellung der Durchsatzleistung der Schlammbeschickungspumpe eingestellt wird.

4. Meß- und Regelverfahren für die biologische Trocknung von Klärschlamm, bei dem

- Rohschlamm oder Faulschlamm mechanisch entwässert,

- strukturiertes Rückgut und/oder ein Kohlenstoff-Träger, z.B. Sägemehl, zugegeben und vermischt wird, dieses Substrat in zwangsbelüfteten Containern ca. sieben bis zehn Tage zum Verrotten unter Kohlenstoff-Veratmung gelagert und

- einige Wochen anschließend im Freien zur Nachrotte gelagert wird,

**dadurch gekennzeichnet, daß**
am Container

- der Luftdurchsatz (9. Meßgröße),
- der $O_2$-Gehalt der Zu- und Abluft (10./11. Meßgröße) oder der $CO_2$-Gehalt der Abluft (14. Meßgröße),
- die Temperatur der Zu- und Abluft (15./16. Meßgröße) oder die Temperatur des Substrates im Container (17. Meßgröße) ermittelt werden und
- der Luftdurchsatz sowie die Temperatur der Zuluft so geregelt werden, daß mit einem Minimum an Betriebskosten ein Maximum an biologischer Aktivität, gekennzeichnet durch Wärmegewinn, Wasserverdunstung und Kohlenstoffveratmung, erzielt wird.

5. Meß- und Regelverfahren nach Anspruch 4,
   **dadurch gekennzeichnet, daß**
   zusätzlich der TS- und OTS-Gehalt des Substrates und der Feuchtegehalte der Zu- und Abluft (12./13. Meßgröße) ermittelt werden.

6. Meß- und Regelverfahren nach Anspruch 4 oder 5,
   **dadurch gekennzeichnet, daß**
   die 9.bis 16. Meßgröße wenigstens an den ersten 3 Tagen der Vorrotte in Abständen von etwa einer Stunde ermittelt werden und der TS- und OTS-Gehalt des Substrates etwa einmal täglich aus den Ausgangsgrößen des ersten Regelkreises und dem im Container erfolgenden permanent gemessenen Wasserentzug, berechnet aus der 9., 12., 13., 15. und 16. Meßgröße, sowie dem OTS-Gehalt errechnet wird.

7. Meß- und Regelverfahren nach Anspruch 4,5 oder 6,
   **dadurch gekennzeichnet, daß**
   - der Luftdurchsatz zwischen 50 und 120 $m^3$ Luft/Std. und Container gehalten wird, solange
   - der Wasserentzug wenigstens 2 Gramm Wasser je durchströmendem $m^3$ Luft beträgt, falls das Ziel der Rotte ein möglichst hoher TS-Gehalt ist, oder
   - der $CO_2$-Gehalt der Abluft mindestens 5 x, vorzugsweise 10 x dem normalen $CO_2$-Gehalt der Luft entspricht,
   - bzw. der Sauerstoffgehalt der Abluft höchstens 90% des Sauerstoffgehaltes der Zuluft beträgt, wenn das Ziel der Rotte ein möglichst niedriger OTS-Gehalt ist,
   - wobei beim Unterschreiten dieser Werte der Luftdurchsatz proportional gesenkt wird, bis mindestens etwa 60 % TS-Gehalt, bzw. weniger als 40% OTS, je nach Zielsetzung, erreicht sind.

8. Meß- und Regelverfahren nach einem der Ansprüche 5-7,
   **dadurch gekennzeichnet, daß**
   der Luftdurchsatz während des Verweilens des Substrates im Container,
   - am ersten Tag an der unteren Grenze, also etwa bei $5 m^3$ Luft je Stunde und $m^3$ Substrat,
   - am 2. bis 5. Tag der Luftdurchsatz über etwa 1/2 Tag langsam angehoben, in der Nähe der oberen Grenze von etwa $12 m^3$ Luft je Stunde und $m^3$ Substrat gehalten und anschließend ebenso wieder abgesenkt wird und
   - ab dem 6. Tag, also in der sogenannten Endphase der Vorrotte, der Luftdurchsatz bei etwa $5 m^3$ Luft je Stunde und $m^3$ Substrat gehalten wird.

9. Meß.- und Regelverfahren nach einem der Ansprüche 4. bis 8,
   **dadurch gekennzeichnet, daß**
   die Temperatur der Zuluft für den Container zwischen 45° und 80°C gehalten wird, solange
   - $(T_{Lufteintritt} + 20 °C > T_{Luftaustritt} > (T_{Lufteintritt} - 10 \% C)$,
   - der OTS-Gehalt wenigstens 1/3 der Trockensubstanz beträgt.

10. Meß- und Regelverfahren nach einem der vorhergehenden Ansprüche,
    **dadurch gekennzeichnet, daß**
    die Vorrotte im Container abgebrochen wird, wenn
    - der Sauerstoffgehalt der Abluft 90 bis 95% des Sauerstoffgehaltes der Zuluft übersteigt und
    - der $CO_2$-Gehalt der Abluft zu steigen beginnt, falls das Ziel der Vorrotte ein möglichst hoher OTS-Gehalt ist.

11. Meß- und Regelverfahren nach einem der vorhergehenden Ansprüche,
    **dadurch gekennzeichnet, daß**
    die Temperatur des Substrates an drei Meßstellen innerhalb des Containers, von denen eine im oberen Bereich, eine in der Mitte und eine im unteren Bereich liegt, etwa alle 12 Stunden ermittelt wird.

4./5. MG.: %TS,OTS

6./7. MG          8. MG

Roh-

-schlamm

Faul-

Siebbandpresse

Mischer

9.-17. MG

Abluft

WT

Verbrennung
Deponie
Dünger

Container

Zuluft

Rück gut

Pallmannmühle

3. MG: Durchsatz

Rückgut

1./2. MG:
% TS, OTS (Charge)

EP 0 508 383 A1

| | Europäisches Patentamt | **EUROPÄISCHER RECHERCHENBERICHT** | Nummer der Anmeldung |
|---|---|---|---|

EP   92 10 6012

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X<br>A | DE-A-3 043 258 (NEMETZ, H.)<br>* Ansprüche *<br>* Seite 6, Absatz 3 - Seite 8, Absatz 1 *<br>* Seite 10, Absatz 2 - Seite 11, Absatz 1 *<br>--- | 1,2<br>3-5,9 | C05F7/00<br>C05F17/00 |
| A | DE-A-3 827 288 (KNEER, F. S.)<br>* Ansprüche 1,2 *<br>* Spalte 5, Zeile 53 - Spalte 6, Zeile 28 *<br>--- | 4,5,7-11 | |
| A | WO-A-9 009 964 (LA TROBE UNIVERSITY)<br><br>* Ansprüche 1-3,5,6,8-11 *<br>* Seite 2, Zeile 24 - Seite 4, Zeile 27 *<br>* Seite 6, Zeile 17 - Seite 10, Zeile 6 *<br>* Seite 16, Zeile 1 - Zeile 16 *<br>--- | 1,4,7,9,<br>11 | |
| P,A | EP-A-0 463 546 (ALLIED COLLOIDS)<br>* Ansprüche 1-7 *<br>* Spalte 4, Zeile 22 - Spalte 6, Zeile 23 * | 1-4,9 | |
| | -----  | | **RECHERCHIERTE SACHGEBIETE (Int. Cl.5 )**<br><br>C05F<br>C02F |

Der vorliegende Recherchenbericht wurde für alle Patentansprüche erstellt

| Recherchenort | Abschlußdatum der Recherche | Prüfer |
|---|---|---|
| DEN HAAG | 14 JULI 1992 | RODRIGUEZ FONTAO M.B |